# FASCICULE DE BREVET EUROPEEN

(11) **EP 3 012 194 B1**
(45) Date de publication et mention de la délivrance du brevet: **08.07.2020**
(21) Numéro de dépôt: 15190096.6
(22) Date de dépôt: 16.10.2015
(51) Int. Cl.: B64G 1/64, B64G 1/10

(54) **MANIPULATION D'UN SATELLITE DANS L'ESPACE**
BEDIENUNG EINES SATELLITEN IM WELTRAUM
MANIPULATION OF A SATELLITE IN SPACE

(30) Priorité: 24.10.2014 FR 1402388; 26.06.2015 FR 1501346
(43) Date de publication de la demande: 27.04.2016
(73) Titulaire: THALES, 92400 Courbevoie (FR); Centre National d'Etudes Spatiales, 75039 Paris Cedex 01 (FR)
(72) Inventeur: VEZAIN, Stéphane, 06210 MANDELIEU (FR); BAUDASSE, Yannick, 06156 CANNES LA BOCCA cedex (FR); STANEK, Didier, 06150 CANNES LA BOCCA (FR); BILLOT, Carole, 06156 CANNES LA BOCCA cedex (FR)
(74) Mandataire: Lucas, Laurent Jacques

(56) Documents cités:
- CN-A- 103 625 656
- JP-A- H0 763 245
- JP-A- H02 160 494
- US-A- 5 040 748

## Description

### Domaine de l'invention

L'invention concerne le domaine des satellites et en particulier celui de leur transport dans l'espace.

### Etat de la Technique

De nombreuses manipulations de satellites se déroulent dans l'espace. Par exemple, des satellites anciens peuvent être désorbités, des satellites peuvent être transférés vers de nouvelles orbites, d'autres encore peuvent être ravitaillés ou bien réparés.

La conception et la fabrication effective de véhicules spécifiques, i.e. dédiés au transport de satellites, s'est développée très récemment. Les solutions envisagées connues à ce jour se fondent généralement sur l'utilisation de bras articulés. Ces solutions présentent de nombreux inconvénients. Un "bras articulé" selon l'état de la technique est un bras asservi, utilisant généralement de nombreux actuateurs aux articulations (afin de permettre autant de degrés de liberté). Chaque actuateur est associé à une probabilité de panne si bien que la fiabilité globale d'un bras articulé est problématique. Le stockage d'un bras (par exemple au lancement) implique un besoin de gerbage significatif, qui n'est pas toujours possible techniquement ou économiquement. Ce stockage est de plus associé à un point de panne unique, qui n'est pas toujours acceptable. Enfin, un bras articulé peut être difficile à piloter ou à tout le moins peut impliquer des efforts de programmation significatifs.

Le document JPH07 63245 (TOSHIBA CORP), publié en mars 1995, décrit un dispositif de maintien et de libération qui ne nécessite aucune mesure de protection contre les chocs. Le système décrit utilise notamment un arbre à vis 7 permettant de faire avancer et reculer un élément mobile 12. Cette approche présente néanmoins des limitations. Le document JP H02 160494 A décrit un système de manipulation d'un objet spatial dans l'espace utilisant une structure articulée.

Il existe un besoin industriel pressant pour des méthodes et des systèmes améliorés, en particulier fiables, pour la manipulation de satellites dans l'espace.

### Résumé de l'invention

Selon l'invention, un système de manipulation d'un objet spatial dans l'espace est défini dans la revendication 1. Des modes de réalisation sont définis dans les revendications 2 à 14.

Selon l'invention, une méthode pour manipuler un objet spatial dans l'espace est définie dans la revendication 15. Un mode de réalisation est défini dans la revendication 16.

### Description des figures

Différents aspects et avantages de l'invention vont apparaitre en appui de la description d'un mode préféré d'implémentation de l'invention mais non limitatif, avec référence aux figures ci-dessous :
Les figures 1A et 1B illustrent schématiquement un des principes de l'invention;
Les figures 2A, 2B et 2C illustrent un exemple de stockage du système de manipulation d'un satellite selon un mode de réalisation particulier;
Les figures 3A, 3B et 3C illustrent des variantes de mises en œuvre;
Les figures 4A à 4I illustrent schématiquement le fonctionnement d'un sous-ensemble en détaillant les principales étapes de verrouillage et de déverrouillage d'un objet spatial;
Les figures 5A et 5B illustrent certains aspects relatifs à la rotation de l'actionneur rotatif ;
La figure 6 illustre un perfectionnement de l'invention.

### Description détaillée de l'invention

La description des modes de réalisation de l'invention se déroule généralement dans l'espace, i.e. à gravité nulle. Toutefois, la force de gravitation demeure négligeable par rapport aux forces mécaniques présentement mises en œuvre, si bien que les diverses actions ou opérations ou manipulations décrites ici peuvent s'observer à terre (modulo quelques adaptations sans conséquence sur la nature de l'invention; par exemple l'objet spatial ne flotte pas mais est arrimé de quelque manière).

Un objet spatial peut être un satellite ou une portion de satellite (artificiel ou naturel), un déchet, un outil, un élément ou portion de station spatiale, un instrument de mesure, un autre véhicule de transport de satellite, une portion de combinaison d'astronaute ou bien encore un étage lanceur.

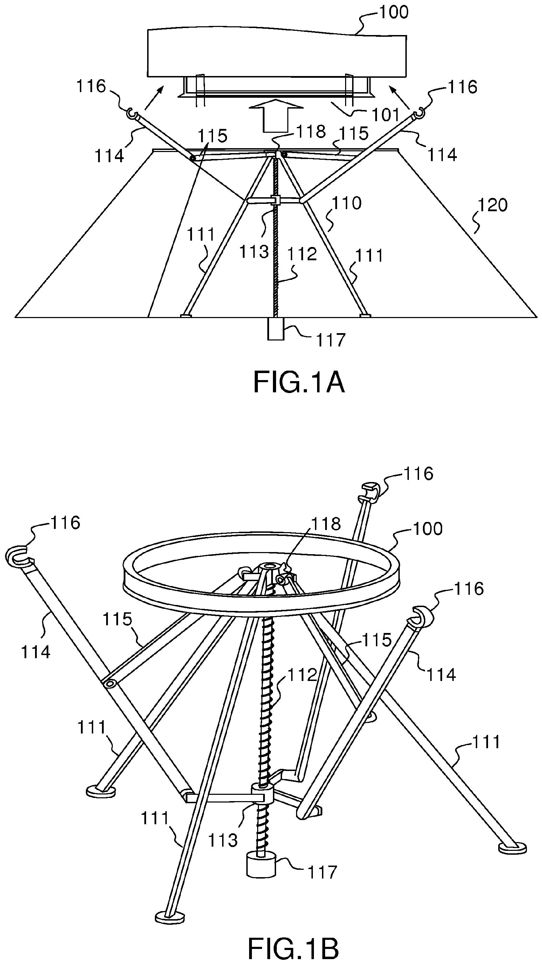

Les figures 1A et 1B illustrent schématiquement un des principes de l'invention. La figure 1A est une vue en coupe et la figure 1B est une vue en perspective. Les figures montrent un satellite 100 présentant une interface 101 au système de manipulation 110. Le système de manipulation est situé (e.g. replié ou déployé ou stocké) dans un espace de stockage 120.

De manière générale, l'espace de stockage 120 peut être tout type de logement, cavité, espace, cache, abri, protection ou environnement, convenant au stockage du mécanisme. Dans un cas particulier avantageux, l'espace de stockage peut être un cône (ou "cône d'interface"). Dans d'autres modes de réalisation, l'espace de stockage peut être un cylindre ou un logement parallélépipédique (ou de toute autre forme géométrique). L'espace de stockage peut être rigide ou bien déformable.

Le système de manipulation 110 comprend une structure fixe porteuse 111, une tige filetée 112, une noix 113, plusieurs barres articulées (parties de plusieurs "bras") 114 et 115, plusieurs appendices ou terminaisons de préhension 116, un actionneur rotatif 117 (par exemple un moteur électrique) et une jonction articulée 118.

Un "bras" au sens de l'invention ne comprend pas de motorisation ou de moyens d'actuation (un bras comprend des barres articulées, i.e. des barres plus ou moins rigides en interaction les unes avec les autres par l'entremise de jonctions ou articulations, généralement fixes). La géométrie (i.e. la forme) des bras ou barres peut-être très variable, le nombre aussi (deux ou trois ou plus). Les bras peuvent être rigides dans certains modes de réalisation mais des bras souples et/ou flexibles peuvent être utilisés dans d'autres modes de réalisation.

L'actionneur 117 est généralement rotatif (e.g. moteur à révolution) mais certains modes de réalisation peuvent utiliser des actionneurs pneumatiques et/ou linéaires de type piston. Dans un mode de réalisation, l'actionneur rotatif peut comprendre (par exemple) un moteur en rotation qui entraîne une vis en rotation, qui elle-même entraîne un écrou. L'utilisation d'une "vis à rouleaux" (selon son nom usuel) peut être préconisée (ladite vis comprend une vis simple et un écrou à rouleaux). Dans d'autres modes de réalisation, il est possible d'utiliser une vis et un écrou standard ou bien encore une vis à billes. Il est également possible d'utiliser un actionneur linéaire pour faire déplacer la noix dans un sens ou dans un autre; la liaison de type vis-écrou sera alors remplacée par une liaison glissière. L'invention peut utiliser de manière générale tout dispositif permettant d'entraîner la noix selon une direction verticale.

Dans un mode de réalisation, la structure fixe porteuse 111 est arrimée au véhicule de transfert portant également le cône.

La structure fixe est généralement rigide mais peut être élastique dans certains modes de réalisation. Les matériaux qui peuvent être utilisés pour ces pièces de structures comprennent (mais ne sont pas limitées à) l'aluminium, le titane, l'acier ou des alliages. Des matériaux composites peuvent également être utilisés (e.g. composites carbones, etc).

La tige filetée centrale 112 possède une extrémité qui est fixée à la sortie de l'actionneur 117 et une autre extrémité qui présente une liaison pivot avec la structure fixe porteuse, une noix taraudée 113 guidée par la tige filetée et de plusieurs bras 114, lesquels peuvent être composés de barres articulées 114 et 115 également articulés à leurs interfaces sur la noix et sur la structure porteuse.

Dans un mode de réalisation, le mécanisme comprend trois bras (114, 115). Un mécanisme à trois bras représente un compromis (actuellement) intéressant entre poids et stabilité de la préhension, compte tenu des exigences et contraintes industrielles actuelles (par exemple choix de matériaux, critères économiques).

Un mécanisme à deux bras reste toutefois possible (par exemple si le mode de contact entre l'objet spatial et le système de manipulation le permet avec suffisamment de robustesse et/ou de fiabilité). Un mécanisme à plus de 3 bras est également possible, au prix d'un surcroît de pièces mécaniques et *in fine* de poids, bien que chaque bras puisse possiblement être redimensionné (par exemple allégé).

Les appendices ou terminaisons de préhension 116 peuvent utiliser une grande variété de moyens. Par exemple, les moyens de préhension peuvent utiliser (y compris en combinaison): des crochets (par exemple passifs et/ou motorisés), des pinces, des griffes, des appendices (par exemple magnétiques ou électromagnétiques), des systèmes d'aspiration, des systèmes à colle, etc.

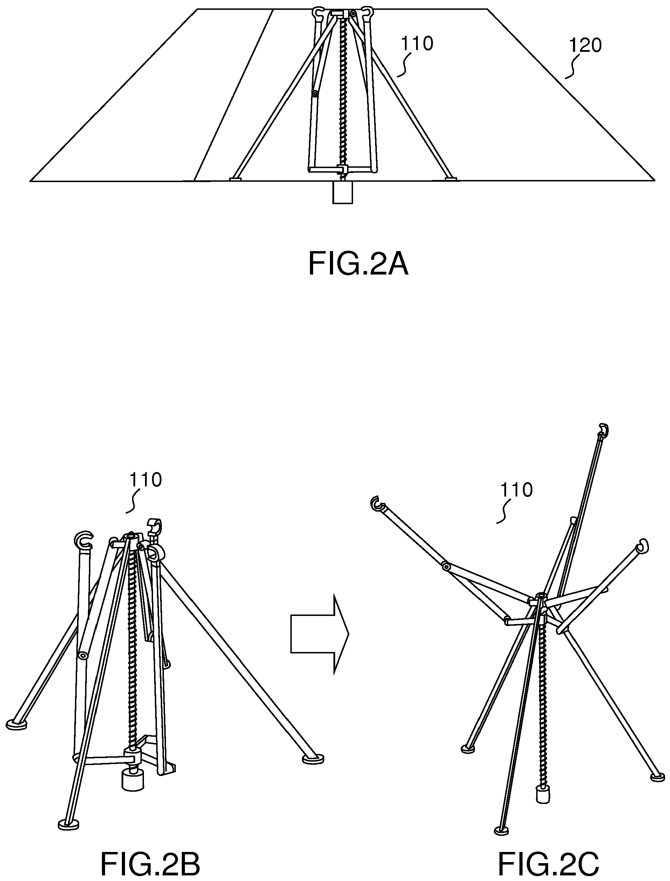

La figure 2A illustre un exemple de stockage du système de manipulation d'un satellite selon un mode de réalisation particulier. La figure montre le système de manipulation de satellite dans une configuration stockée dans un cône d'interface 120.

Dans un mode de réalisation, l'espace de stockage ou cône d'interface 120 est de type ACU (Adaptateur Charge Utile). Au lancement, chaque satellite est fixé sur un support. Ce support est appelé Adaptateur Charge Utile (ACU, Upper adapter et Lower adapter). Un ACU comprend généralement deux parties: une partie qui reste sur le lanceur et une autre partie qui reste sur le satellite. Dans certains modes de réalisation, une seule partie est requise (i.e. un des deux éléments à connecter ne requiert pas de moyens d'attache spécifiques). La coiffe est larguée dès que le lanceur quitte l'atmosphère. Lors de la dernière phase du vol, la séparation de l'ensemble ACU-satellite se fait par découpe, généralement grâce à un cordon pyrotechnique.

La figure 2B illustre le système de manipulation dans une configuration repliée ou stockée, tandis que la figure 2C représente ce même système dans une configuration déployée ou dépliée.

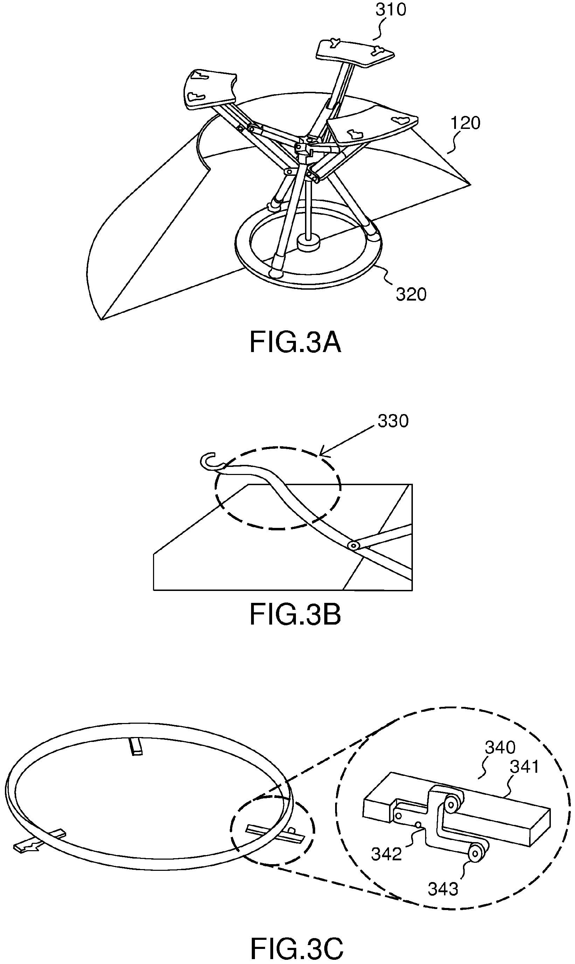

Les figures 3A, 3B et 3C illustrent des variantes de mises en œuvre.

La figure 3A représente une configuration dans laquelle les bras sont arrangés en parallélogrammes et les bras sont terminés par des dispositifs ou appendices de préhensions 310 permettant de conserver une orientation sensiblement constante.

La figure 3B illustre une variante de réalisation comprenant des bras courbés 330 pour optimiser l'ouverture de préhension tout en évitant les collisions avec ou dans le cône de stockage.

La figure 3C illustre une variante de réalisation comprenant plusieurs sous-ensembles 340 (par exemple trois, répartis radialement à intervalles angulaires réguliers, de manière à venir "attraper" ou "capturer" i.e. saisir et maintenir l'interface de l'objet spatial ciblé. Les sous-ensembles 340 permettent notamment de "verrouiller" (et respectivement de "déverrouiller") l'objet spatial à manipuler.

Chaque sous-ensemble 340 est composé d'un plateau 341, d'un support de galets articulé 342 et de au moins deux galets 343.

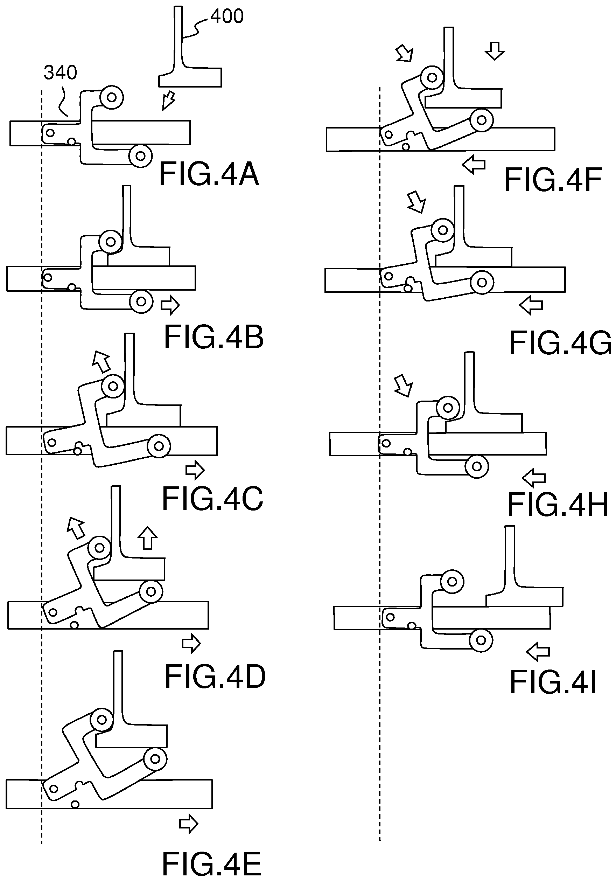

Les figures 4A à 4I illustrent schématiquement le fonctionnement d'un sous-ensemble en détaillant les principales étapes de verrouillage et de déverrouillage d'un objet spatial.

Les étapes 4A à 4E illustrent le verrouillage ou la capture ou la saisie de l'objet spatial par une variante d'interface du système de manipulation selon l'invention. A l'étape 4A, l'interface 101 de l'objet spatial (100, 400) et l'appendice (116, 340) du système de manipulation 110 selon l'invention se rapprochent l'un de l'autre (le mouvement est relatif). A l'étape 4B, l'interface du satellite 101 est posée sur le plateau 341. A l'étape 4C, les deux éléments (interface et appendice) se rapprochent radialement. L'interface satellite se glisse alors sous le galet supérieur et le galet supérieur roule le long de la partie verticale (ou inclinée) de l'interface satellite ce qui fait pivoter le support de galet. Le galet inférieur entre alors en contact avec la face inférieure de l'interface satellite. A l'étape 4D, toujours sous l'effet du rapprochement radial de l'interface et de l'appendice, le galet inférieur soulève l'interface satellite tandis que le galet supérieur le guide verticalement. A l'étape 4E, le galet supérieur se cale dans l'angle formé par l'interface satellite. L'ensemble se stabilise à l'équilibre sous l'effet de l'actuation horizontale des deux éléments.

Les étapes 4F à 4I illustrent le déverrouillage ou le largage ou le lâchage ou la dessaisie ou la libération de l'objet spatial par ladite variante d'interface du système de manipulation selon l'invention.

A l'étape 4F, les sous-ensembles s'éloignent radialement : l'objet spatial n'est plus "serré". L'interface du satellite descend alors guidée par les galets. A l'étape 4G, l'interface du satellite 400 se pose sur le plateau 341. A l'étape 4H, les sous-ensembles continuent de s'écarter, libérant petit à petit l'interface du satellite. A l'étape 4I, l'interface satellite est entièrement libérée et le satellite peut alors évoluer librement.

Un programme (suite d'instructions) ou logiciel peut servir à asservir le système de manipulation selon l'invention. En particulier, le programme peut contrôler ou réguler la manipulation de l'objet spatial en asservissant l'actuateur unique (selon les deux sens de rotation). Dans certains modes de réalisation, des capteurs (ou "senseurs") peuvent être utilisés et permettre de localiser l'objet spatial, d'ajuster la vitesse d'approche, de déterminer un ou plusieurs points de contact avec l'objet spatial et éventuellement de mesurer les différentes pressions aux différents points de contact. Des moyens complémentaires (par exemple de vision par ordinateur) peuvent permettre de simuler la saisie de l'objet spatial, de prendre en compte ou d'anticiper les mouvements relatifs propres de l'objet spatial (ainsi que les manœuvres ou mouvements relatifs propres au véhicule de transport) et ainsi d'ajuster ou d'optimiser les opérations de dépliement et de repliement de la structure articulée afin d'optimiser ou de réguler in fine la saisie de l'objet spatial.

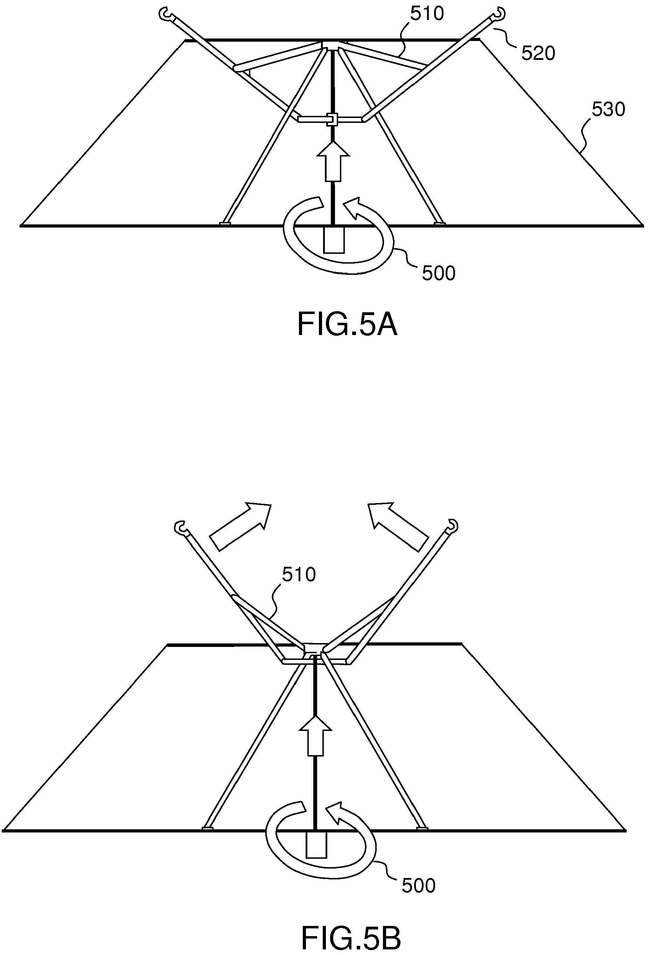

Les figures 5A et 5B illustrent certains aspects relatifs à la rotation de l'actionneur rotatif. De manière générale, l'actionneur relatif peut fonctionner selon deux sens de rotation (i.e. sens trigonométrique et sens anti-trigonométrique). Avec la configuration des barres articulées selon l'invention, il est possible d'utiliser un seul et même sens de rotation pour déployer la structure et également pour saisir l'objet spatial (et éventuellement aussi verrouiller ledit objet). Cette configuration est illustrée aux figures 5A et 5B. La figure 5A montre le déploiement de la structure repliée lorsque l'actionneur rotatif se met à tourner dans le sens 500. Tenus par les barres 510, les barres 520 se déplient et se dégagent hors de l'espace de stockage 530. A la figure 5B, ultérieurement dans le temps, toujours selon le sens de rotation 500 de l'actionneur rotatif (i.e. selon un « même sens » ou un «sens identique»), contraints par les barres 510, les bras ou barres 520 se resserrent de manière à saisir l'objet spatial (non représenté). Ainsi un seul et même sens de rotation de l'actionneur rotatif est -il suffisant pour effectuer la manipulation désirée. Cette configuration particulière et avantageuse n'empêche pas d'autres types de configuration utilisant les deux sens de rotation de l'actionneur.

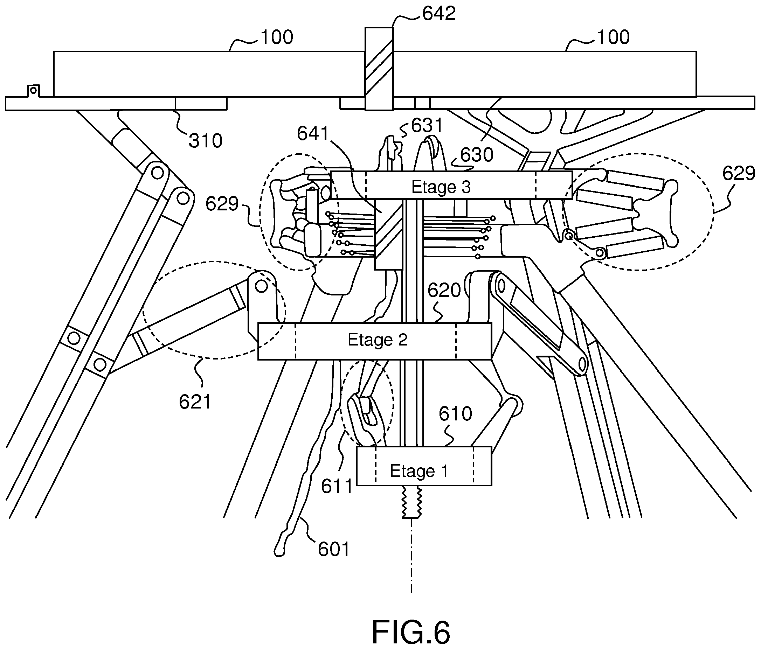

La figure 6 illustre un perfectionnement de l'invention.

L'architecture des barres articulées peut en effet aménager des espaces intérieurs utiles pour implémenter de nombreuses services ou fonctions envers l'objet spatial (e.g. alimentation, réparation, assistance, etc).

En particulier, une fonction d'alimentation en carburant peut être implémentée. Il est souligné que le perfectionnement décrit ci-après n'est pas limité à l'approvisionnement en carburant: il peut être procédé, en substitution ou en complément, à l'établissement de connections de type électrique et/ou d'échanges de données via des câbles et/ou de divers autres fluides (oxygène, etc).

Dans un mode de réalisation et selon le perfectionnement de l'invention, le système de manipulation d'un objet spatial comprend de manière additionnelle trois étages (610, 620, 630) ou plateaux associés à la structure articulée. Ces plateaux peuvent être pleins ou évidés. Le nombre de trois étages n'est pas indispensable : un seul étage « intérieur » peut être ajouté.

Les différents étages additionnels ou ensembles de barres articulées peuvent être associées de différentes manières. Dans certains modes de réalisation, les ensembles de barres articulées et/ou les étages étant couplés (i.e. étant dépendants l'un de l'autre dans certains de leurs déplacements), le déplacement et/ou le blocage de l'un (par exemple le système de préhension sur l'interface satellite) peut entraîner le déplacement et/ou le blocage de l'autre. La configuration géométrique précise (e.g. via les pivots flexibles 610) permet des gammes variées de comportements dynamiques (effet retard, etc)

Le premier étage 610 peut par exemple servir à transmettre les translations verticales transmises depuis l'actuateur unique.

Le second étage 620 permet (entre autres aspects) de guider ou canaliser ou restreindre ou limiter ou contrôler le déplacement dans l'espace des tuyaux ou raccords d'alimentation en carburant (la figure montre que le tuyau 601 passe au travers de l'évidement du second étage, sans pouvoir de fait s'emmêler dans le dispositif selon l'invention). De manière générale, le second étage ou plateau peut comprendre des moyens de guidage adaptés à guider une ou plusieurs conduites vers une ou plusieurs vannes extérieures au système de manipulation d'un objet spatial. Les moyens de guidage peuvent notamment comprendre un ou plusieurs cylindres de protection. D'autres moyens de guidage sont possibles. Le premier étage et le second étage peuvent être fusionnés et ne constituer qu'un étage unique.

Le troisième étage 630 permet d'assurer la connexion entre les tuyaux d'alimentation et les interfaces adaptées présentes sur l'objet spatial ou satellite pour le transfert de carburant, en permettant par exemple la mise en connexion fluidique entre des vannes 641 et 642. Des modes de réalisation spécifiques peuvent prévoir des étages 3 très spécifiques (blocage par ergots, motorisation indépendante, etc)

Dynamiquement, un exemple de fonctionnement concerté des trois étages selon le perfectionnement de l'invention est illustré à la figure 6. Sous l'actionnement d'un motoréducteur, l'étage 1 s'élève, tandis que des bielles et pivots flexibles maintiennent un effort mécanique sur l'étage 2. L'étage 1 actionne l'étage 2 lequel procède à la saisie de l'objet spatial; les deux étages viennent ensuite pousser l'étage 3 sur lequel sont fixées des vannes de remplissage. Cet étage 3 est guidé par un système de bielles en parallélogramme et pivots flexibles, lui permettant de se déplacer verticalement. Résultat des mises en mouvement successives des différents étages, les vannes sont guidées vers des interfaces (par exemple des interfaces d'alimentation du satellite).

Plus en détail, dans un mode de réalisation particulier, des pivots flexibles 611 peuvent permettre de relier les étages 1 et 2. Avantageusement, les éventuels chocs de collision peuvent être absorbés par ces pivots flexibles. Sous l'action d'un motoréducteur tournant dans le même sens que lors du déploiement, les plateaux peuvent se refermer pour bloquer le satellite selon un système de préhension autobloquant.

Dans un mode de réalisation, les différents ensembles de barres articulées (le système de manipulation et le système portant le plateau d'alimentation) i.e. les étages (610, 620, 630) sont déployés ou repliés par le même actuateur mis en œuvre pour le système de manipulation d'un objet spatial selon l'invention. Héritant du même avantage, ce mode de réalisation avantageux en ce qu'il requiert un nombre minimal de pièces mécaniques et est donc robuste aux pannes.

Dans un autre mode de réalisation toutefois, le système portant le plateau d'alimentation (par exemple l'étage 3) peut être motorisé par un système *indépendant* de l'actuateur unique mis en œuvre pour le système de manipulation selon l'invention. Ce mode de mise en œuvre évite notamment la possibilité d'un point de panne unique.

Dans un mode de réalisation, le déploiement est assuré par un actuateur unique qui est constitué par un motoréducteur, une vis et un écrou à billes ou encore à rouleaux. Le motoréducteur actionne par exemple une vis en rotation, ce qui a pour effet de translater le premier étage 610 et le second étage 620 en translation verticale (vers le haut sur la figure), grâce à l'écrou lié à l'étage 1. Le second étage 620 étant lié au premier étage 610 par un système à barres avec des pivots flexibles 611, il se translate verticalement de la même façon. Le second étage 620 actionne quant à lui les bras articulés (via 621) qui grâce à leur cinématique particulière, écartent les plateaux (e.g. 310).

Dans un mode de réalisation, les vannes 641 et 642 sont automatiquement alignées par un système de guidage 629. Par exemple, un étage 3 spécifique peut être composé d'un plateau fixe et d'un plateau tournant sur lequel sont montées les vannes. Un système d'auto-alignement des vannes peut alors être aménagé sur le plateau tournant. Un tel système peut utiliser des galets 631 roulant sur une came, la came étant fixée sur l'interface satellite; ainsi, en fonction de la position de départ, le plateau tournant pivotera d'un maximum de 90° pour s'aligner. Dans un mode de réalisation, concernant les conduites ou tuyaux d'alimentation (« *tubing* »), des boucles d'aisance (non représentées) pourront avantageusement « absorber » la rotation. Dans un mode de réalisation particulier, le plateau tournant de l'étage 3 peut comprendre une interface rotative sur lequel l'étagel viendra s'appuyer.

Sous l'action du motoréducteur, les vannes maintenant alignées avec leurs interfaces satellite, peuvent venir se connecter ou se brancher. Différents types de connections peuvent faciliter ces branchements.

Dans un développement, le système de manipulation selon l'invention comprend des éléments de gerbage spécifiques, permettant par exemple la saisie d'un objet spatial de manière « sécurisée ». Par exemple, un plateau roulant d'un étage 3 spécifiquement adapté pourra être en prise avec la vis et être bloqué en translation par des ergots. Pour se dégerber lors de l'actionnement du motoréducteur, ladite vis pourra être amenée à «lâcher prise» sur le plateau tournant; le système de guidage de l'étage 3 considéré pourra alors reprendre une position d'équilibre et libérer le plateau tournant des ergots.

La présente invention peut s'implémenter à partir d'éléments matériel et/ou logiciel. En particulier, une méthode d'asservissement du mécanisme peut comprendre différentes étapes pour gérer ou réguler les opérations de déploiement/repliement de la structure articulée (i.e. de verrouillage/déverrouillage d'un objet spatial). Des instructions de code informatique peuvent permettre, par exemple lorsqu'exécutées sur un ordinateur, de réaliser lesdites opérations. Une ou plusieurs étapes de la méthode peuvent par suite être associées à un produit programme d'ordinateur et/ou à un support lisible par ordinateur. Ledit support peut être électronique, magnétique, optique ou électromagnétique.

## Revendications

1. Système (110) de manipulation d'un objet spatial (100) dans l'espace, le système comprenant une structure articulée, ladite structure articulée comprenant un unique actuateur (117) configuré pour contrôler à la fois le déploiement de ladite structure articulée dans l'espace, la préhension de l'objet spatial et le repliement de ladite structure articulée ; le système de manipulation (110) comprenant une structure fixe porteuse (111) et une tige filetée centrale (112), ladite tige filetée centrale (112) possédant une première extrémité fixée à la sortie de l'actuateur (117) et une seconde extrémité présentant une liaison pivot avec la structure fixe porteuse (111), le système de manipulation comprenant en outre une noix taraudée (113) guidée par la tige filetée centrale et des ensembles de barres articulées (114, 115) maintenues par des liaisons pivot à leurs interfaces sur la noix taraudée (113) et sur la structure fixe porteuse (111) ;
- des premières barres articulées (114) desdits ensembles étant chacune terminées par un dispositif de préhension (116, 340), **caractérisé en ce qu'**au moins un dispositif de préhension (116, 340) comprend un plateau (341), au moins deux galets (343) et un support articulé (342) pour lesdits galets.

2. Système selon la revendication 1, le système de manipulation étant configuré pour être stocké dans une configuration repliée dans un cône d'interface.

3. Système selon la revendication 1, comprenant trois ensembles de barres articulées (114,115).

4. Système selon la revendication 1 comprenant deux ensembles de barres articulées (114,115).

5. Système selon la revendication 1 comprenant quatre ensembles de barres articulées (114,115).

6. Système selon la revendication 1 dans lequel une ou plusieurs des premières barres articulées (114) présentent des portions courbées.

7. Système selon la revendication 1, ledit au moins un dispositif de préhension étant agencé de manière à verrouiller et/ou à déverrouiller l'objet spatial par écartement desdites premières barres articulées (114).

8. Système selon l'une quelconque des revendications précédentes, comprenant au moins un capteur pour déterminer la position de l'objet spatial.

9. Système selon l'une quelconque des revendications précédentes, comprenant au moins un capteur pour déterminer un contact et/ou la pression de contact avec l'objet spatial.

10. Système selon l'une quelconque des revendications précédentes, comprenant en outre un premier étage ou plateau contrôlé par l'unique actuateur.

11. Système selon la revendication 10, comprenant en outre un second étage ou plateau associé au premier étage et/ou à la structure articulée, participant à la préhension de l'objet spatial et/ou permettant de guider des conduites d'alimentation en carburant.

12. Système selon la revendication 11, comprenant en outre un troisième étage portant des interfaces d'alimentation en carburant.

13. Système selon la revendication 12, ledit troisième étage étant motorisé indépendamment de l'unique actuateur.

14. Méthode pour manipuler un objet spatial (100) dans l'espace, la méthode comprenant les étapes consistant à:
- déployer une structure articulée en procédant à la rotation d'un unique actuateur (117) dans un premier sens de rotation; et
- saisir l'objet spatial en repliant la structure articulée en procédant à la rotation de l'actuateur dans un second sens de rotation;
ladite structure articulée comprenant un unique actuateur (117) configuré pour contrôler à la fois le déploiement de ladite structure dans l'espace, la préhension de l'objet spatial et le repliement de ladite structure articulée ;
ladite structure articulée comprenant :
- une structure fixe porteuse (111) et une tige filetée centrale (112), ladite tige filetée centrale (112) possédant une première extrémité fixée à la sortie de l'actuateur (117) et une seconde extrémité présentant une liaison pivot avec la structure fixe porteuse (111), et
- une noix taraudée (113) guidée par la tige filetée centrale et des ensembles de barres articulées (114, 115) maintenues par des liaisons pivot à leurs interfaces sur la noix taraudée (113) et sur la structure fixe porteuse (111) ; **caractérisée en ce que**:
le second sens de rotation est identique au premier sens de rotation;
et dans laquelle :
lorsque l'actuateur (117) se met à tourner dans le sens de rotation (500), tenues par des premières barres articulées (510) desdits ensembles, des secondes barres articulées (520) desdits ensembles se déplient, et, toujours selon le même sens de rotation (500) de l'actuateur (117), contraintes par les premières barres articulées (510), les secondes barres articulées (520) se resserrent de manière à saisir l'objet spatial.

15. Méthode selon la revendication 14, comprenant en outre une étape consistant à ajuster la rotation de l'actuateur en fonction de données reçues d'un capteur de position et/ou de contact avec l'objet spatial.

## Patentansprüche

1. System (110) zum Manipulieren eines Raumobjekts (100) im Weltraum, wobei das System eine Gelenkstruktur umfasst, wobei die Gelenkstruktur ein einziges Stellglied (117) umfasst, das zum gleichzeitigen Steuern des Entfaltens der Gelenkstruktur im Weltraum, des Ergreifens des Raumobjekts und des Rückfaltens der Gelenkstruktur konfiguriert ist;
wobei das Manipulationssystem (110) eine feste Trägerstruktur (110) und einen zentralen Gewindestab (112) umfasst, wobei der zentrale Gewindestab (112) ein am Ausgang des Stellglieds (117) befestigtes erstes Ende und ein zweites Ende aufweist, das eine Drehverbindung mit der festen Trägerstruktur (111) aufweist, wobei das Manipulationssystem ferner eine vom zentralen Gewindestab geführte Gewindemutter (113) und Gelenkstabanordnungen (114, 115) umfasst, die von den Drehverbindungen an ihren Schnittstellen an der Gewindemutter (113) und der festen Trägerstruktur (111) gehalten werden;
wobei die ersten Gelenkstäbe (114) der Baugruppen jeweils durch eine Greifvorrichtung (116, 340) terminiert sind, **dadurch gekennzeichnet, dass** wenigstens eine Greifvorrichtung (116, 340) eine Platte (341), wenigstens zwei Rollen (343) und einen Gelenkträger (342) für die Rollen umfasst.

2. System nach Anspruch 1, wobei das Manipulationssystem zum Verstauen in einer gefalteten Konfiguration in einem Schnittstellenkonus konfiguriert ist.

3. System nach Anspruch 1, das drei Gelenkstabanordnungen (114, 115) umfasst.

4. System nach Anspruch 1, das zwei Gelenkstabanordnungen (114, 115) umfasst.

5. System nach Anspruch 1, das vier Gelenkstabanordnungen (114, 115) umfasst.

6. System nach Anspruch 1, bei dem ein oder mehrere der ersten Gelenkstabanordnungen (114) gekrümmte Abschnitte aufweisen.

7. System nach Anspruch 1, wobei die wenigstens eine Greifvorrichtung so ausgestattet ist, dass sie das Raumobjekt durch Auseinanderspreizen der ersten Gelenkstäbe (114) ver- und/oder entriegeln kann.

8. System nach einem der vorherigen Ansprüche, das wenigstens einen Sensor zum Bestimmen der Position des Raumobjekts umfasst.

9. System nach einem der vorherigen Ansprüche, das wenigstens einen Sensor zum Bestimmen eines Kontakts und/oder des Kontaktdrucks mit dem Raumobjekt umfasst.

10. System nach einem der vorherigen Ansprüche, das ferner eine erste Stufe oder Platte umfasst, die durch das einzige Stellglied gesteuert wird.

11. System nach Anspruch 10, das ferner eine zweite Stufe oder Platte umfasst, die mit der ersten Stufe und/oder der Gelenkstruktur assoziiert ist, die am Ergreifen des Raumobjekts beteiligt ist und/oder das Führen der Kraftstoffzuführungsleitungen zulässt.

12. System nach Anspruch 11, das ferner eine dritte Stufe umfasst, die Kraftstoffzuführungsschnittstellen trägt.

13. System nach Anspruch 12, wobei die dritte Stufe unabhängig von dem einzigen Stellglied motorisiert ist.

14. Verfahren zum Manipulieren eines Raumobjekts (100) im Weltraum, wobei das Verfahren die folgenden Schritte beinhaltet:
- Einsetzen einer Gelenkstruktur durch Drehen eines einzigen Stellglieds (117) in einer ersten Drehrichtung; und
- Erfassen des Raumobjekts beim Rückfalten der Gelenkstruktur durch Drehen des Stellglieds in einer zweiten Drehrichtung;
wobei die Gelenkstruktur ein einziges Stellglied (117) umfasst, konfiguriert zum gleichzeitigen Steuern des Einsetzens der Struktur im Weltraum, des Ergreifens des Raumobjekts und des Rückfaltens der Gelenkstruktur;
wobei die Gelenkstruktur Folgendes umfasst:
- eine feste Trägerstruktur (111) und einen zentralen Gewindestab (112), wobei der zentrale Gewindestab (112) ein am Ausgang des Stellglieds (110) befestigtes erstes Ende und ein zweites Ende aufweist, das eine Drehverbindung mit der festen Trägerstruktur (111) aufweist, und
- eine Gewindemutter (113), geführt von dem zentralen Gewindestab und von Gelenkstabanordnungen (114, 115), die von den Drehverbindungen an deren Schnittstellen auf der Gewindemutter (113) und auf der festen Trägerstruktur (111) gehalten werden; **dadurch gekennzeichnet, dass**:
die zweite Drehrichtung mit der ersten Drehrichtung identisch ist;
und wobei:
wenn das Stellglied (117) beginnt, sich in der von den ersten Gelenkstäben (510) der Anordnungen gehaltenen Drehrichtung (500) zu drehen, die zweiten Gelenkstäbe (520) der Anordnungen sich entfalten und, immer noch in derselben Drehrichtung (500) des Stellglieds (117), und durch erste Gelenkstäbe (510) gehalten, die zweiten Gelenkstäbe (520) sich festziehen, um das Raumobjekt zu ergreifen.

15. Verfahren nach Anspruch 14, das ferner einen Schritt umfasst, der im Justieren der Drehung des Stellglieds in Abhängigkeit von Daten besteht, die von einem Sensor für Position und/oder Kontakt mit dem Raumobjekt empfangen werden.

## Claims

1. System (110) for manipulating a space object (100) in space, the system comprising an articulated structure,
said articulated structure comprising a single actuator (117) configured to control, equally, the deployment of said articulated structure in space, the gripping of the space object and the folding down of said articulated structure;
the manipulation system (110) comprising a fixed supporting structure (111) and a central threaded rod (112), said central threaded rod (112) having a first end fixed to the output of the actuator (117) and a second end having a pivot link with the fixed supporting structure (111), the manipulation system further comprising a tapped whorl (113) guided by the central threaded rod and sets of articulated bars (114, 115) held by pivot links at their interfaces on the tapped whorl (113) and on the fixed supporting structure (111);
first articulated bars (114) of said sets being terminated by a gripping device (116, 340), **characterized in that** at least one gripping device (116, 340) comprises a plate (341), at least two rollers (343) and an articulated support (342) for said rollers.

2. System according to Claim 1, the manipulation system being configured to be stored in a folded-down configuration in an interface cone.

3. System according to Claim 1, comprising three sets of articulated bars (114, 115).

4. System according to Claim 1, comprising two sets of articulated bars (114, 115).

5. System according to Claim 1, comprising four sets of articulated bars (114, 115).

6. System according to Claim 1, in which one or more of the first articulated bars (114) have curved portions.

7. System according to Claim 1, said at least one gripping device being arranged in such a way as to lock and/or unlock the space object by separation of said first articulated bars (114).

8. System according to any one of the preceding claims, comprising at least one sensor for determining the position of the space object.

9. System according to any one of the preceding claims, comprising at least one sensor for determining a contact and/or the contact pressure with the space object.

10. System according to any one of the preceding claims, further comprising a first stage or plate controlled by the single actuator.

11. System according to Claim 10, further comprising a second stage or plate associated with the first stage and/or with the articulated structure, participating in the gripping of the space object and/or making it possible to guide fuel supply pipes.

12. System according to Claim 11, further comprising a third stage bearing fuel supply interfaces.

13. System according to Claim 12, said third stage being motorized independently of the single actuator.

14. Method for manipulating a space object (100) in space, the method comprising the steps of:
- deploying an articulated structure by proceeding to rotate a single actuator (117) in a first direction of rotation; and
- grasping the space object by folding down the articulated structure by proceeding to rotate the actuator in a second direction of rotation;
said articulated structure comprising a single actuator (117) configured to control, equally, the deployment of said structure in space, the gripping of the space object and the folding down of said articulated structure;
said articulated structure comprising:
- a fixed supporting structure (111) and a central threaded rod (112), said central threaded rod (112) having a first end fixed to the output of the actuator (117) and a second end having a pivot link with the fixed supporting structure (111), and
- a tapped whorl (113) guided by the central threaded rod and sets of articulated bars (114, 115) held by pivot links at their interfaces on the tapped whorl (113) and on the fixed supporting structure (111); **characterized in that**,
the second direction of rotation being identical to the first direction of rotation; and wherein:
when the actuator (117) starts to rotate in the direction of rotation (500), held by the first articulated bars (510) of said sets, the second articulated bars (520) of said sets are unfolded, and, still in the same direction of rotation (500) of the actuator (117), constrained by first articulated bars (510), the second articulated bars (520) are tightened so as to grasp the space object.

15. Method according to Claim 14, further comprising a step consisting of adjusting the rotation of the actuator as a function of data received from a sensor of position and/or of contact with the space object.
